Europäisches Patentamt

European Patent Office

Office européen des brevets

(19)

(11) Veröffentlichungsnummer: **0 115 329**
**B1**

(12) **EUROPÄISCHE PATENTSCHRIFT**

(45) Veröffentlichungstag der Patentschrift:
**10.01.90**

(51) Int. Cl.⁴: **B 23 D 63/14**

(21) Anmeldenummer: **84100734.7**

(22) Anmeldetag: **25.01.84**

(54) **Sägezahnschleifmaschine.**

(30) Priorität: **29.01.83 DE 3303075**

(43) Veröffentlichungstag der Anmeldung:
**08.08.84 Patentblatt 84/32**

(45) Bekanntmachung des Hinweises auf die Patenterteilung:
**10.01.90 Patentblatt 90/2**

(84) Benannte Vertragsstaaten:
**CH FR GB IT LI SE**

(56) Entgegenhaltungen:
**DE-A- 2 614 419**
**DE-A- 2 751 408**
**DE-A- 2 751 656**
**DE-C- 890 911**
**GB-A- 2 099 338**
**US-A- 2 451 295**

**THE OFFICIAL GAZETTE OF THE UNITED STATES**
**PATENT OFFICE, Band 23, 6. Februar 1883, Seite 451**

(73) Patentinhaber: **Vollmer Werke Maschinenfabrik GmbH,**
**Wilhelmstrasse 20, D-7950 Biberach/Riss 1 (DE)**

(72) Erfinder: **Vollmer, Erwin Hermann, Jahnstrasse 4,**
**D-7242 Dornhan (DE)**
Erfinder: **Glatthaar, Manfred, Ignaz-Rohr-Strasse 24,**
**D-7238 Hochmössingen (DE)**

(74) Vertreter: **Goetz, Rupert et al, Patentanwälte**
**Wuesthoff- v. Pechmann-Behrens-Goetz**
**Schweigerstrasse 2, D-8000 München 90 (DE)**

ACTORUM AG

## Beschreibung

Die Erfindung betrifft eine Sägezahnschleifmaschine mit einem um mehrere Achsen schwenkbaren und in mehreren Richtungen translatorisch bewegbaren Schleifkopf, der zwei auf einer gemeinsamen Schleifspindel befestigte Schleifscheiben aufweist, nämlich

– eine zum Schleifen von Zahnbrustflächen vorgesehene Tellerscheibe mit einer Stirnseite, die an ihrem äußeren Rand mit einem für das Schleifen von Hartmetall geeigneten Schleifbelag, insbesondere einem Diamant- oder Borazonbelag, versehen ist, und einer Rückseite, die so geformt ist, daß die beiden Seiten am äußeren Rand der Tellerscheibe spitz zulaufen, und

– eine zum Schleifen von Zahnrückenflächen vorgesehene Topfscheibe mit einer von der Tellerscheibe abgewandten Stirnseite, die einen ringförmigen, für das Schleifen von Hartmetall geeigneten Schleifbelag, insbesondere einen Diamant- oder Borazonbelag trägt.

Bei einer bekannten Maschine dieser Gattung (GB-A-2 099 338, insbes. Fig. 6) sind die beiden Schleifscheiben an je einem Ende der Schleifspindel derart befestigt, daß die Tellerscheibe mit ihrer beim Schleifen aktiven Stirnfläche der Topfscheibe zugewandt ist, während die beim Schleifen aktive Stirnfläche der Topfscheibe von der Tellerscheibe abgewandt ist. Die beiden Schleifscheiben haben den gleichen Durchmesser. Die Schleifspindel ist zwischen den beiden Schleifscheiben im Schleifkopf gelagert und in ihrer Mitte mit einem Antriebsmotor verbunden. Der Schleifkopf ist um eine Schwenkachse schwenkbar, welche die geometrische Achse der Schleifspindel in deren Mitte rechtwinklig schneidet. Um wahlweise die Tellerscheibe oder die Topfscheibe in eine Stellung zum Schleifen von Zahnbrust- bzw. Zahnrückenflächen zu bringen, ist es erforderlich, den Schleifkopf um 180° um die Schwenkachse zu schwenken und ihn außerdem um beispielsweise 100° um eine Kippachse zu kippen, die sich im rechten Winkel zu beiden vorgenannten Achsen erstreckt.

Es ist ferner eine Verbundschleifscheibe bekannt (DE-C-890 911 Abb. 2), die aus zwei flachen Schleifscheiben zusammengesetzt ist, nämlich einer ersten Schleifscheibe, die einen Schleifbelag an ihrer Mantelfläche trägt, und einer zweiten Schleifscheibe, die einen Schleifbelag an einer Stirnfläche trägt und einen kleineren Durchmesser hat als die erste Schleifscheibe. Eine solche Verbundscheibe läßt sich nicht wahlweise mit einer ihrer beiden Schleifscheiben zum Planschleifen von Zahnbrustflächen und mit der anderen Schleifscheibe zum Planschleifen von Zahnrückenflächen verwenden, da für diese beiden Arbeitsgänge je eine stirnseitig arbeitende Schleifscheibe erforderlich ist.

Es ist zwar auch eine Verbundscheibe bekannt (DE-C-890 911 Abb. 1), bei der eine mittlere Schleifscheibe, die an ihrer Mantelfläche mit einem Schleifbelag versehen ist, zwischen zwei Schleifscheiben angeordnet ist, die je einen kleineren Durchmesser haben als die mittlere Schleifscheibe und an ihren voneinander abgewandten Stirnseiten mit Schleifbelag versehen sind. Eine solche Verbundscheibe ist aber zu breit, um in Zahnlücken üblicher Sägeblätter eintauchen zu können.

Der Erfindung liegt deshalb die Aufgabe zugrunde, eine in einem einzigen Schleifkopf untergebrachte Schleifeinheit so auszubilden, daß einerseits Zahnbrustflächen auch bei sehr engen Zahnabständen geschliffen und andererseits ein zum Schleifen von Hartmetalleinsätzen von Zähnen geeigneter Belag, insbes. ein Diamant- oder Borazonbelag, von genügend großer Breite zum Schleifen von Zahnrückenflächen untergebracht werden kann. Dabei soll der Winkel der Schwenkung des Schleifkopfes, die für einen Übergang vom Zahnbrustschleifen auf Zahnrückenschleifen oder umgekehrt erforderlich ist, möglichst klein gehalten werden.

Die Aufgabe ist erfindungsgemäß dadurch gelöst, daß

– die Topfscheibe einen kleineren Durchmesser als die Tellerscheibe hat, und

– beide Schleifscheiben einander dicht benachbart zu einer Verbundscheibe zusammengesetzt sind.

Die beiden Schleifscheiben der erfindungsgemäßen Verbundscheibe stören einander trotz ihrer engen Nachbarschaft nicht; wegen des größeren Durchmessers der Tellerscheibe kann diese unbehindert durch die Topfscheibe in schmale Zahnlücken eintauchen, um Zahnbrustflächen zu schleifen und andererseits kann nach einer Schwenkung des Schleifkopfes um einen Winkel in der Größenordnung von nur 100° die Topfscheibe zum Schleifen von Zahnrückenflächen eingesetzt werden, ohne daß die Tellerscheibe dabei einen Sägezahn berührt.

Vorteilhafte Weiterbildungen der Erfindung sind in den Unteransprüchen beschrieben.

Ein Ausführungsbeispiel der Erfindung wird im folgenden anhand schematischer Zeichnungen mit weiteren Einzelheiten erläutert. Es zeigen:

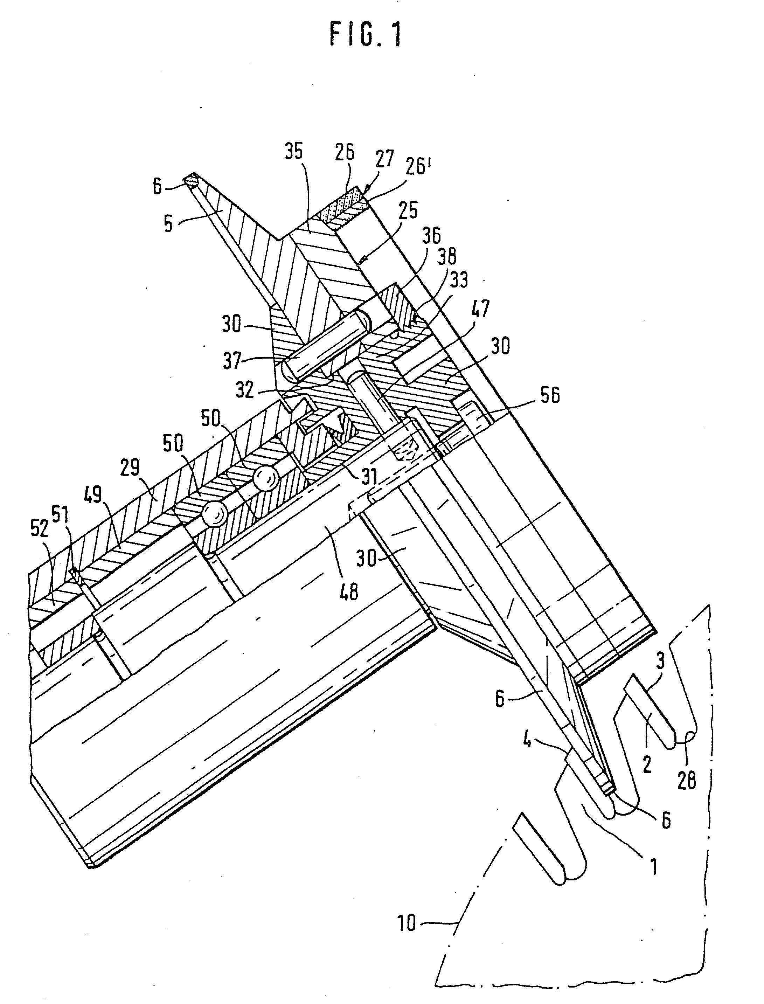

Fig. 1 eine teilweise als Axialschnitt gezeichnete Seitenansicht eines Schleifkopfes mit erfindungsgemäßer Verbundscheibe in einer Stellung zum Schleifen von Zahnbrustflächen,

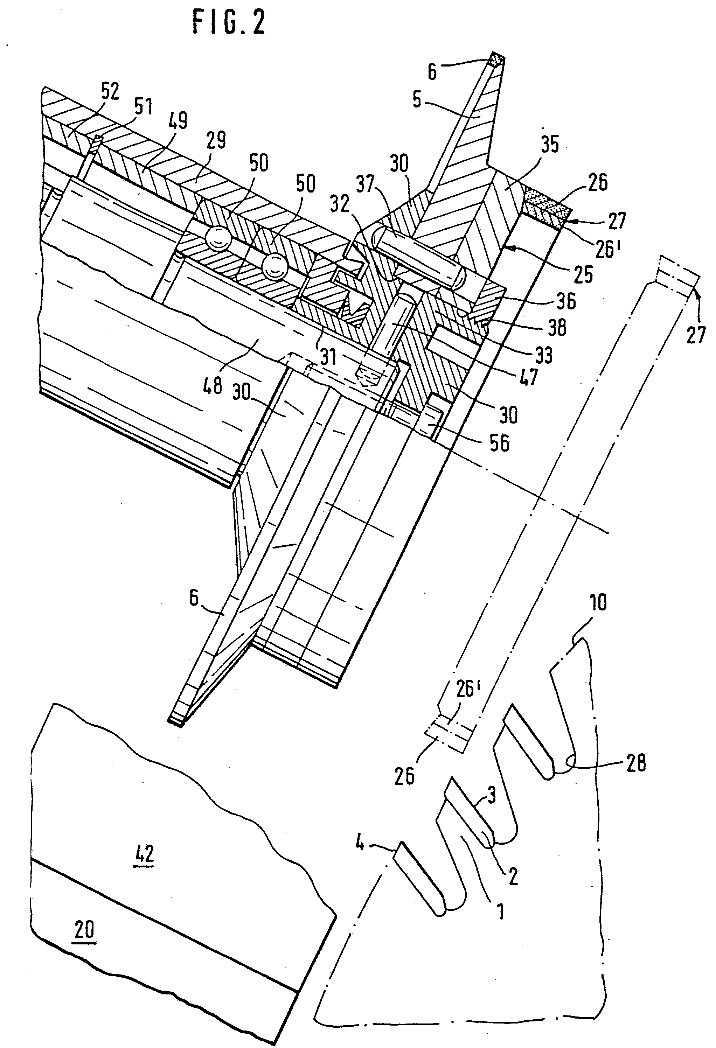

Fig. 2 eine entsprechende Ansicht nach Verschwenken des Schleifkopfes in eine Stellung für das Schleifen von Zahnrückenflächen,

Fig. 3 eine Sägezahnschleifmaschine mit einem erfindungsgemäßen Schleifkopf und

Fig. 4 eine Teilansicht von links, der in Fig. 3 dargestellten Maschine.

Im Ausführungsbeispiel sind Zähne eines Kreissägeblattes 10 zu schleifen, die je einen Hartmetalleinsatz 2 mit einer Zahnbrustfläche 3 und einer Zahnrückenfläche 4 aufweisen. Zum Schleifen der Zahnbrustflächen 3 ist eine Tellerscheibe 5 vorgesehen, und zum Schleifen der Zahnrückenflächen 4 eine Topfscheibe 25, die einen kleineren Durchmesser als die Tellerscheibe 5 hat und mit dieser zu einer Verbundscheibe zusammengesetzt ist.

Die Tellerscheibe 5 hat eine flache Stirnseite und eine kegelstumpfförmige Rückseite, ist also im Querschnitt zu ihrem äußeren Rand hin spitz zulaufend ausgebildet, so daß sie in schmale Zahnlücken 28 eintauchen kann. Auf der flachen Stirnseite der Tellerscheibe 5 ist in deren äußeren Rand ein Diamantbelag 6 eingelassen, dessen Stirnfläche die aktive Schleiffläche der Tellerscheibe 5 bildet.

Die Topfscheibe 25 hat einen kreischeibenförmigen Metallkörper 35, vorzugsweise aus Aluminium, auf dessen von der Tellerscheibe 5 abgewandte Stirnseite ein den Topf der Topfscheibe bildender Schleifmittelring 26, 26' aufgesetzt ist. Dieser besteht aus einem äußeren Ring 26 gröberen Korns und einem inneren Ring 26' feineren Korns, die beide mit Kunststoff gebunden und zusammengesintert sind. Die freien Stirnflächen der beiden Ringe 26 und 26' bilden zusammen eine Schleiffläche 27 für das Schleifen der Zahnrückenflächen 4.

Die dargestellte Sägezahnschleifmaschine hat einen einzigen Schleifkopf 12 mit einer Schleifspindel 48, die in einer äußeren Spindelhülse 29 mit Kugellagern 50 gelagert ist. Zwischen den Kugellagern 50 und weiteren, nicht gezeichneten Lagern am anderen Ende der Schleifspindel 48 befinden sich, durch einen in die Spindelhülse 29 eingesetzten Sicherungsring 51 voneinander getrennt, Zwischenhülsen 49 und 52. Auf dem dargestellten freien Ende der Schleifspindel 48 ist mittels einer Spannschraube 56 ein Flanschkörper 30 festgespannt, der mit einer Mittelbohrung 31 auf das Wellenende aufgeschoben und an diesem durch einen Mitnahmestift 47 festgehalten ist.

Die Tellerscheibe 5 liegt mit ihrer flachen Stirnseite am Flanschkörper 30 an und ist mit einer Mittelbohrung 32 auf einem Zapfen 33 des Flanschkörpers 30 zentriert. An der Rückseite der Tellerscheibe 5 liegt die von dem Metallkörper 35 gebildete Rückseite der Topfscheibe 25 an. Der Metallkörper 35 ist ebenfalls auf dem Zapfen 33 des Flanschkörpers 30 zentriert. Die Tellerscheibe 5 und die Topfscheibe 25 sind mit dem Flanschkörper 30 mittels eines Spannringes 36 zusammengespannt, der auf einen Gewindeansatz 38 am äußeren Ende des Zapfens 33 aufgeschraubt ist. Gegen gegenseitige Drehung sind die Schleifscheiben 5 und 25 und der Flanschkörper 30 durch einen sie durchdringenden Sicherungsstift 37 gesichert.

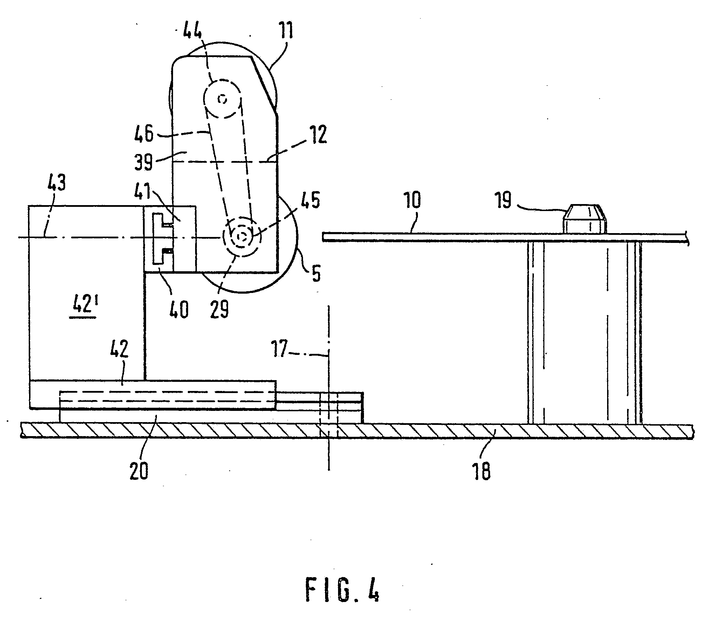

Der Schleifkopf 12 weist ein Zwischengehäuse 39 auf, an das ein Elektromotor 11 achsparallel zur Schleifspindel 48 angeflanscht ist. Das Zwischengehäuse 39 umhüllt einen Riementrieb, der von einer Abtriebsscheibe 44 des Motors 11 aus über einen Riemen 46 eine Antriebsscheibe 45 der Schleifspindel 48 antreibt (Fig. 4).

Der Schleifkopf 12 ist an einem Quersupport 41 angeordnet, der an einem Querführungsteil 40 parallel zur Schleifspindel 48 verschiebbar geführt ist. Das Querführungsteil 40 ist um eine Achse 43 schwenkbar, welche die geometrische Achse der Schleifspindel 48 rechtwinklig schneidet. Die Schwenkachse 43 ist in einem Gehäuse 42' auf einem Hauptsupport 42 angeordnet. Dieser ist auf einem Schwenkarm 20 verschiebbar geführt, der auf einer Montageplatte 18 um eine Achse 17 schwenkbar ist, welche die Achse 43 rechtwinklig schneidet.

Der Schwenkarm 20 trägt also über den Hauptsupport 42 und die übrigen bewegungsübertragenden Elemente den Schleifkopf 12 mit der Verbundscheibe 5, 25. Von der Lage des Schwenkarms 20 hängt es ab, ob die Verbundscheibe 5, 25 eine für das Schleifen der Zahnbrustflächen 3 oder für das Schleifen der Zahnrückenflächen 4 geeignete Lage hat.

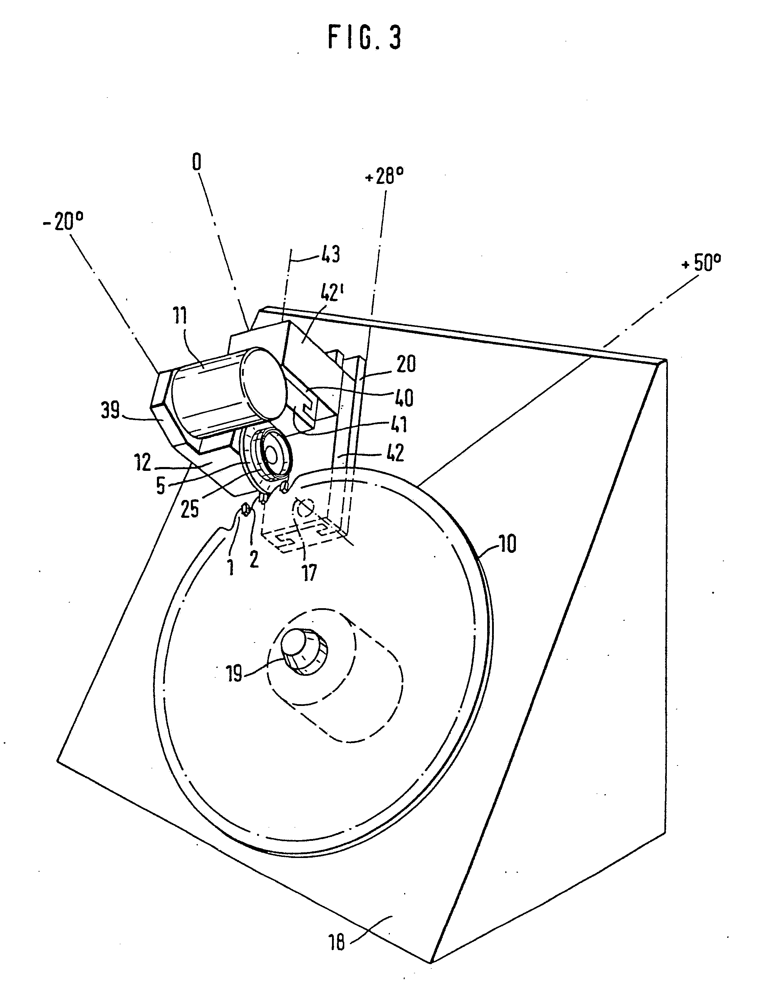

Bei der in Fig. 3 und 4 dargestellten Maschine hat der Schwenkarm 20 eine Nullage, in der die Schwenkachse 43 die geometrische Achse des Aufsteckdorns 19 schneidet, sich also in Richtung eines Durchmessers des Sägeblattes 10 erstreckt. Aus dieser Nullage läßt sich der Schwenkarm 20, und mit ihm der Schleifkopf 12, zum Schleifen von Zahnbrustflächen 3 mit negativem Spannwinkel in einem Bereich bis etwa −20° entgegen dem Uhrzeigersinn schwenken. Zum Schleifen von Zahnbrustflächen 3 mit positivem Spannwinkel ist eine Schwenkung des Schwenkarms 20 um bis zu +28° im Uhrzeigersinn vorgesehen. Sollen jedoch Zahnrückenflächen 4 geschliffen werden, so läßt sich der Schwenkarm 20 samt Schleifkopf 12 im dargestellten Beispiel um weitere 50° im Uhrzeigersinn schwenken; der gesamte Schwenkbereich beträgt somit 98°.

Vorzugsweise schneidet die geometrische Achse der Schleifspindel 48 die zu ihr und zueinander rechtwinklig angeordneten Schwenkachsen 17 und 43 in einem und demselben Punkt, der als Schleifmittelpunkt bezeichnet wird. Die Supporte 41 und 42 werden so eingestellt, daß die aktive Stirnfläche der arbeitenden Schleifscheibe, also entweder der Tellerscheibe 5, wenn Zahnbrustflächen 3 zu schleifen sind, oder der Topfscheibe 25, wenn Zahnrückenflächen 25 zu schleifen sind, in einer Ebene liegt, die den Schleifmittelpunkt enthält.

Der Schwenkarm 20 ist in allen seinen Schwenklagen feststellbar. Für seine Verschwenkung sowie für das Verschieben des Hauptsupports 42 auf dem Schwenkarm 20 ist je ein nicht dargestellter hydraulischer Antrieb vorgesehen. Diese hydraulischen Antriebe können durch elektrische Stellmotoren ersetzt sein, die über Mikroprozessoren zu steuern sind.

Die Montageplatte 18, auf der die Schwenkachse 17 und der Aufsteckdorn 19 senkrecht stehen, ist pultartig rückwärts geneigt und im dargestellten Beispiel (Fig. 3) quadratisch gestaltet. Die Schwenkachse 17 des Schwenkarms 20 sowie der Aufsteckdorn 19 für das Sägeblatt 10 sind in einer um 45° gegen die Horizontale geneigten Ebene derart angeordnet, daß der Schwenkarm 20 mit den von ihm getragenen Teilen in der oberen linken Ecke, und der Aufsteckdorn 19 für das Kreissägeblatt 10 in Richtung auf die diagonal gegenüberliegende untere rechte Ecke von der Schwenkachse 17 entfernt auf der Montageplatte 18 Platz finden.

## Patentansprüche

1. Sägezahnschleifmaschine mit einem um mehreren Achsen schwenkbaren und in mehreren Richtungen translatorisch bewegbaren Schleifkopf (12), der zwei auf einer gemeinsamen Schleifspindel (48) befestigte Schleifscheiben aufweist, nämlich

– eine zum Schleifen von Zahnbrustflächen (3) vorgesehene Tellerscheibe (5) mit einer Stirnseite, die an ihrem äußeren Rand mit einem für das Schleifen von Hartmetall geeigneten Schleifbelag (6), insbesondere einem Diamant- oder Borazonbelag, versehen ist, und einer Rückseite, die so geformt ist, daß die beiden Seiten am äußeren Rand der Tellerscheibe (5) spitz zulaufen, und

– eine zum Schleifen von Zahnrückenflächen (4) vorgesehene Topfscheibe (25) mit einer von der Tellerscheibe (5) abgewandten Stirnseite, die einen ringförmigen, für das Schleifen von Hartmetall geeigneten Schleifbelag, insbesondere einen Diamant- oder Borazonbelag (26, 26′) trägt, dadurch gekennzeichnet, daß

– die Topfscheibe (25) einen kleineren Durchmesser als die Tellerscheibe (5) hat, und

– beide Schleifscheiben (5, 25) einander dicht benachbart zu einer Verbundscheibe zusammengesetzt sind.

2. Maschine nach Anspruch 1, dadurch gekennzeichnet, daß die Tellerscheibe (5) und die Topfscheibe (25) Rücken an Rücken, mit ihren Stirnseiten in entgegengesetzte Richtungen weisend, angeordnet sind.

3. Maschine nach Anspruch 2, dadurch gekennzeichnet, daß

– auf der Schleifspindel (48) ein Flanschkörper (30) befestigt ist, an dem die Tellerscheibe (5) mit ihrer Stirnseite anliegend gehalten und mit einer Mittelbohrung (32) auf einem Zapfen (33) zentriert ist,

– die Topfscheibe (25) ebenfalls auf dem Zapfen (33) zentriert ist, und

– beide Scheiben (5, 25) mittels eines Spannringes (36), der auf einen Gewindeansatz (38) des Flanschkörpers (30) aufgeschraubt ist, gegen den Flanschkörper (30) gespannt und durch einen sie durchdringenden Sicherungsstift (37) gegen Verdrehen gegenüber dem Flanschkörper (30) gesichert sind.

4. Maschine nach einem der Ansprüche 1 bis 3, dadurch gekennzeichnet, daß die Topfscheibe (25) einen kreisscheibenförmigen Metallkörper (35) sowie einen stirnseitig auf diesen aufgesetzten Schleifbelag aus einem äußeren Ring (26) von gröberem Korn und einem inneren Ring (26′) von feinerem Korn aufweist, wobei die freien Stirnflächen der beiden Ringe (26, 26′) zusammen eine für das Schleifen von Zahnrückenflächen (4) bestimmte Schleiffläche (27) bilden.

5. Maschine nach einem der Ansprüche 1 bis 4, dadurch gekennzeichnet, daß zum Einstellen des Schleifkopfes (12) samt Verbundscheibe (5, 25) für das Schleifen von wahlweise Zahnbrustflächen (3) oder Zahnrückenflächen (4) bewegungsübertragende Elemente (20, 40 bis 42′) für translatorische Bewegungen des Schleifkopfes (12) in zwei sich rechtwinklig kreuzenden Richtungen vorgesehen sind, nämlich in einer die Achse der Schleifspindel (48) rechtwinklig kreuzenden Richtung und in einer zu dieser Achse parallelen Richtung, sowie für Verschwenkbewegungen um zwei sich rechtwinklig kreuzende Achsen (17, 43), die beide auch die Achse der Schleifspindel (48) rechtwinklig kreuzen.

6. Maschine nach Anspruch 5 mit einer Montageplatte (18), die einen zu ihrer Ebene senkrechten Aufsteckzapfen (19) für ein Kreissägeblatt (10) trägt,
dadurch gekennzeichnet, daß

– auf der Montageplatte (18) ein Schwenkarm (20) um eine Achse (17) parallel zur Ebene der Montageplatte (18) schwenkbar und in seinen Schwenklagen feststellbar ist,

– an dem Schwenkarm (20) ein Hauptsupport (42) translatorisch verschiebbar geführt ist,

– in einem mit dem Hauptsupport (42) fest verbundenen Gehäuse (42′) eine zur Montageplatte (18) und zu dem Schwenkarm (20) parallele Schwenkachse (43) für ein Führungsteil (40) eines Quersupports (41) angeordnet ist,

– der Quersupport (41) translatorisch in einer die Verschieberichtung des Hauptsupports (42) rechtwinklig kreuzenden Richtung verschiebbar ist und den Schleifkopf (12) mit parallel zu seiner Verschieberichtung angeordneter Schleifspindel (48) trägt.

7. Maschine nach Anspruch 6, dadurch gekennzeichnet, daß der Schwenkarm (20) um etwa 100° verschwenkbar ist.

8. Maschine nach Anspruch 6 oder 7, dadurch gekennzeichnet, daß zum Schwenken des Schwenkarms (20) aus einer für das Schleifen von Zahnbrustflächen (3) mit der Tellerscheibe (5) bestimmten Stellung in eine für das Schleifen von Zahnrückenflächen (4) mit der Topfscheibe (5) geeigneten Stellung ein hydraulischer Antrieb vorgesehen ist, dessen Ventile, eingeleitet durch Betätigung von Programmtasten einer Steuerung, elektronisch steuerbar sind.

9. Maschine nach einem der Ansprüche 6 bis 8, dadurch gekennzeichnet, daß die Montageplatte (18) pultartig geneigt ist.

10. Maschine nach Anspruch 9, dadurch gekennzeichnet, daß die Montageplatte (18) mindestens annähernd quadratisch ist und die Schwenkachse (17) des Schwenkarms (20) sowie der Aufsteckdorn (19) auf einer Diagonalen der Montageplatte (18) derart angeordnet sind, daß der Schwenkarm (20) mit den von ihm getragenen Teilen nahe einer oberen Ecke, und das Kreissägeblatt (10) in Richtung auf die diagonal gegenüberliegende untere Ecke vom Schwenkarm (20) entfernt auf der Montageplatte (18) angeordnet sind.

## Claims

1. A sawtooth grinding machine, comprising a grinding head (12) which is pivotable about a plurality of axes and capable of translatory movement in a plurality of directions and which includes two grinding wheels fixed on a common grinding spindle (48), namely

— a disc wheel (5) provided for grinding face areas (3) of teeth and having a front side furnished at its outer edge with an abrasion coating (6) suitable for grinding hard metal, especially a diamond or Borazon coating, and a backside shaped such that both sides taper at the outer edge of the disc wheel (5), and

— a cup wheel (25) provided for grinding back areas (4) of teeth and having a front side remote from the disc wheel (5) carrying an annular abrasion coating suitable for grinding hard metal, especially a diamond or Borazon coating (26, 26'), characterized in that

— the cup wheel (25) has a smaller diameter than the disc wheel (5),

— and both grinding wheels (5, 25) are joined closely adjacent each other to form a composite member.

2. The machine as claimed in claim 1, characterized in that the disc wheel (5) and the cup wheel (25) are arranged back to back with their front sides facing in opposite directions.

3. The machine as claimed in claim 2, characterized in that

— a wheel flange (30) is secured on the grinding spindle (48), the disc wheel (5) being held flush against said wheel flange by its front side and being centred by a central bore (32) on a pin (33),

— the cup wheel (25) likewise is centered on the pin (33), and

— both wheels (5, 25) are clamped against the wheel flange (30) by means of a clamping ring (36) screwed on a threaded extension (38) of the wheel flange (30) and are secured against rotation with respect to the wheel flange (30) by a locking pin (37) passing through them.

4. The machine as claimed in one of claims 1 to 3, characterized in that the cup wheel (25) comprises a circular disc shaped metal body (35) and an abrasion coating placed on the front side thereof and consisting of an outer ring (26) of relatively coarser grain and an inner ring (26') of finer grain, the free end surfaces of both rings (26, 26') combining to form the grinding surface (27) which grinds the back areas (4) of teeth.

5. The machine as claimed in one of claims 1 to 4, characterized in that motion transmitting members (20, 40 to 42') are arranged for adjustment of the grinding head (12) including the composite wheel (5, 25) for the selective grinding of face areas (3) or back areas (4) of teeth to provide translatory movements of the grinding head (12) in two directions which intersect at right angles, namely in a direction crossing the axis of the grinding spindle (48) perpendicularly and in a direction parallel to said axis, and to provide pivoting movements about two axes (17, 43) intersecting at right angles and both also perpendicularly crossing the axis of the grinding spindle (48).

6. The machine as claimed in claim 5, comprising a mounting plate (18) which carries a mandrel (19) perpendicular to the plane thereof for supporting a circular saw blade (10), characterized in that

— on the mounting plate (18) a pivot arm (20) is adapted to pivot about an axis (17), parallel to the plane of the mounting plate (18) and to be fixed in its pivoting positions,

— on the pivot arm (20) a main slide (42) is guided for translatory displacement,

— a pivot axis (43) for a guide part (40) of a cross slide (41) is disposed in a housing (42') firmly connected to the main slide (42) and extends parallel to the mounting plate (18) and to the pivot arm (20),

— the cross slide (41) is displaceable in translatory movement in a direction which crosses the direction of displacement of the main slide (42) at right angles and carries the grinding head (12) with the grinding spindle (48) arranged parallel to its direction of displacement.

7. The machine as claimed in claim 6, characterized in that the pivot arm (20) is pivotable by approximately 100°.

8. The machine as claimed in claim 6 or 7, characterized in that an hydraulic drive is provided for pivoting the pivot arm (20) from a position destined for the grinding of face areas (3) of teeth by the disc wheel (5) into a position which is suitable for the grinding of back areas (4) of teeth by the cup wheel (5), the valves of said hydraulic drive being controllable electronically upon initiation by actuation of program keys of a control.

9. The machine as claimed in one of claims 6 or 8, characterized in that the mounting plate (18) is inclined in desk-like manner.

10. The machine as claimed in claim 9, characterized in that the mounting plate (18) is at least approximately square and the pivot axis (17) of the pivot arm (20) as well as the mandrel (19) are disposed on a diagonal line of the mounting plate (18) such that the pivot arm (20) with the members it carries are arranged near an upper corner and the circular saw blade (10) is arranged toward the diagonally opposed lower corner remote from the pivot arm (20) on the mounting plate (18).

**Revendications**

1. Machine à affûter des dents de scie comportant une tête de meulage (12), pouvant pivoter autour de plusieurs axes et mobile en translation dans plusieurs directions, qui comporte deux disques de meulage fixés sur une broche commune (48), notamment:

— un disque-plateau (5), prévu pour le meulage des surfaces avant (3) des dents, comportant un côté frontal qui est pourvu, sur son bord extérieur, d'une garniture de meulage (6) appropriée pour le meulage de métaux durs, notamment une garniture en diamant ou en borazon, et un côté arrière, qui est profilé de telle sorte que les deux côtés se rejoignent en pointe sur le bord extérieur du disque-plateau (5), et

— un disque-pot (25), prévu pour le meulage des surfaces arrière (4) des dents, comportant un côté frontal opposé au disque-plateau (5) et qui porte une garniture de meulage de forme annulaire, appropriée pour le meulage de métaux durs, notamment une garniture en diamant ou en borazon (26, 26'), caractérisée en ce que:

— le disque-pot (25) a un plus petit diamètre que le disque-plateau (5) et

— les deux disques de meulage (5, 25), placés étroitement l'un contre l'autre, sont réunis sous la forme d'un disque composite.

2. Machine selon la revendication 1, caractérisée en ce que le disque-plateau (5) et le disque-pot (25) sont disposés dos-à-dos, avec leurs côtés frontaux orientés dans des directions opposées.

3. Machine selon la revendication 2, caractérisée en ce que:

— sur la broche de meulage (48) est fixé un corps en forme de bride (30), sur lequel le disque-plateau (5) est maintenu appliqué par son côté frontal et est centré au moyen d'un trou central (32) sur un tourillon (33),

— le disque-pot (25) est également centré sur le tourillon (33), et

— les deux disques (5, 25) sont serrés contre le corps en forme de bride (30) au moyen d'un anneau de serrage (36), qui est vissé sur un appendice fileté (38) du corps en forme de bride (30) et sont bloquées en étant empêchés de tourner par rapport au corps (30) au moyen d'une goupille de sécurité (37) les traversant.

4. Machine selon une des revendications 1 à 3, caractérisée en ce que le disque-pot (25) comporte un corps métallique (35) en forme de disque circulaire ainsi qu'une garniture de meulage, fixée sur celui-ci sur son côté frontal et se composant d'un anneau extérieur (26) à grains grossiers et d'un anneau intérieur (26) à grains fins, les surfaces frontales libres des deux anneaux (26, 26) formant ensemble une surface de meulage (27) servant au meulage des surfaces arrière (4) des dents.

5. Machine selon une des revendications 1 à 4, caractérisée en ce que, pour un réglage de la tête de meulage (12) incluant le disque composite (5, 25), pour le meulage sélectivement de surfaces avant (3) ou de surfaces arrière (4) de dents, il est prévu des éléments (20, 40 à 42') de transmission de mouvements de translation de la tête de meulage (12) dans deux directions se croisant perpendiculairement, notamment dans une direction croisant perpendiculairement l'axe de la broche de meulage (48) et dans une direction parallèle à cet axe, ainsi que pour la transmission de mouvements de pivotement autour de deux axes (17, 43) se croisant perpendiculairement et qui croisent également perpendiculairement l'axe de la broche de meulage (48).

6. Machine selon la revendication 5, comportant un plateau de montage (18), qui porte perpendiculairement à son plan, un tourillon (19) d'emmanchement d'une lame de scie circulaire (10), caractérisée en ce que:

— sur le plateau de montage (18), il est prévu un bras pivotant (20) qui peut tourner autour d'un axe (17) orienté parallèlement au plan du plateau de montage (18) et qui peut être fixé dans ces positions angulaires,

— sur le bras pivotant (20) est guidé en translation un support principal (42),

— dans un carter (42) relié rigidement au support principal (42), il est prévu un pivot (43), parallèle au plateau de montage (18) et au bras pivotant (20), pour une partie de guidage (40) d'un support transversal (41),

— le support transversal (41) est déplaçable en translation dans une direction croisant perpendiculairement la direction de translation du support principal (42) et il porte la tête de meulage (12), avec la broche de meulage (48) disposée parallèlement à sa direction de translation.

7. Machine selon la revendication 6, caractérisée en ce que le bras pivotant (20) peut pivoter d'environ 100°.

8. Machine selon une des revendications 6 ou 7, caractérisée en ce que, pour le pivotement du bras pivotant (20) depuis une position définie pour le meulage des surfaces avant (3) des dents avec le disque-plateau (5) jusque dans une position appropriée pour le meulage des surfaces arrière (4) des dents avec le disque-pot (5), il est prévu un entraînement hydraulique dont les soupapes, sollicitées par actionnement de touches de programmation d'une commande, peuvent être commandées électroniquement.

9. Machine selon une des revendications 6 à 8, caractérisée en ce que le plateau de montage (18) est incliné à la façon d'un pupitre.

10. Machine selon la revendication 9, caractérisée en ce que le plateau de montage (18) a au moins approximativement une forme carrée et le pivot (17) du bras pivotant (20) ainsi que le tourillon d'emmanchement (19) sont disposés sur une diagonale du plateau de montage (18) de telle sorte que le bras pivotant (20), avec les parties portées par lui, soit disposé sur le plateau de montage (18) à proximité d'un coin supérieur et que la lame de scie circulaire (10) soit disposée sur le plateau de montage (18) en étant éloignée du bras pivotant (20) en direction du coin inférieur diagonalement opposé.

# FIG. 1

# FIG.2

# FIG. 3

FIG. 4